# EUROPEAN PATENT APPLICATION

(11) **EP 1 887 413 A1**
(43) Date of publication of application: **13.02.2008**
(21) Application number: 07110497.0
(22) Date of filing: 18.06.2007
(51) Int. Cl.: G02B 26/12, H04N 1/04

(54) **Image forming apparatus having deformation limiting area**

(30) Priority: 12.07.2006 KR 20060065558
(71) Applicant: Samsung Electronics Co., Ltd., Suwon-si Gyeonggi-do 443-742 (KR)
(72) Inventor: Tahk, Gyung-mo, Yeontong-gu, Gyeonggi-do Suwon-si (KR)
(74) Representative: Waddington, Richard

(57) **Abstract**

An image forming apparatus includes a laser scanning unit (30) having at least two coupling parts (133), and a main body frame (170) having a main body coupling part (171) corresponding to each of the coupling parts (133), at least one of the coupling parts (133) and the main body coupling part (171) having a deformation limiting cut-out (173) to limit a relative deformation of the laser scanning unit (30) coupled to the main body frame (170).

## Description

The present invention relates to an image forming apparatus, and more particularly, to an image forming apparatus improved in a coupling configuration of a laser scanning unit.

In general, in response to an output signal, an image forming apparatus prints image data stored in a host apparatus on to printing paper.

Such an image forming apparatus includes a photosensitive body on which an electrostatic latent image is formed, a developing roller for selectively developing a developer on the latent image of the photosensitive body, and a transferring unit for transferring the developed developer from the latent image of the photosensitive body to printing paper, so that a desired image is printed on the printing paper. Such a printing process is called electrophotography. Examples of electrophotographic image forming devices include printers, photocopiers, and multifunction devices, etc.

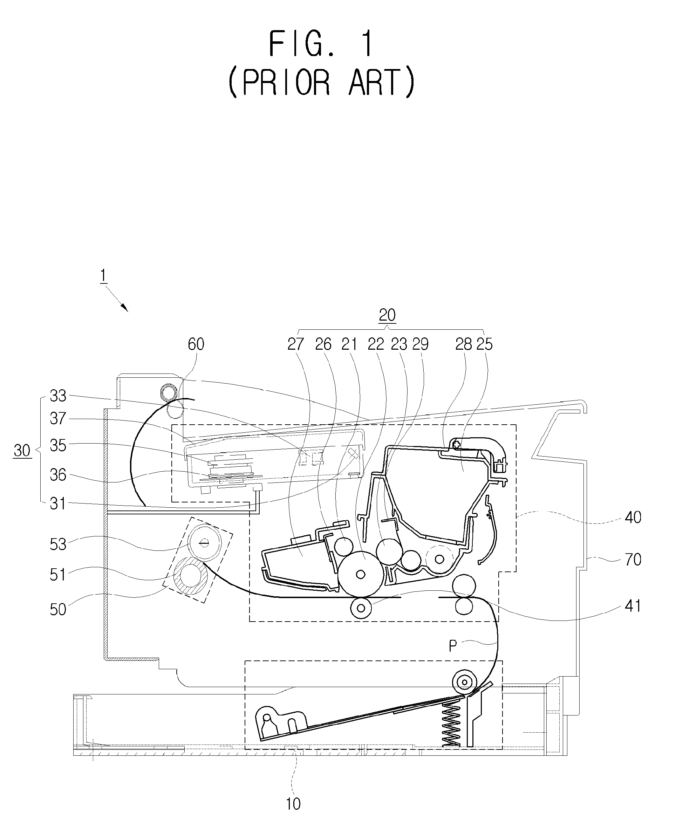

FIG. 1 is a sectional view illustrating a configuration of a conventional electrophotographic image forming apparatus 1. As shown in FIG. 1, the electrophotographic image forming apparatus 1 comprises a paper feeding part 10 in which printing paper is stored, an image forming part 40 to form an image on a printing paper page fed from the paper feeding part 10, a fixing part 50 to apply heat and pressure to a developer spread from the image forming part 40 to fix the developer on the surface of the printing paper page, and a paper discharging part 60 to discharge the printing paper page on which the image is/has been formed.

The image forming part 40 includes a laser scanning unit 30 that receives image information (image data) via a laser signal to form an electrostatic latent image on the surface of a photosensitive body 22; and a developing cartridge 20 that includes a developing roller 23 to spread the developer on the electrostatic latent image of the photosensitive body 22 formed by the laser scanning unit 30, and the photosensitive body 22 (in contact with the printing paper) is then used to transfer the developer onto the printing paper to print an image thereon. Referring to FIG. 1, the printing paper P is impinges on photosensitive body 22 and roller 41. Once the photosensitive body 22 has transferred the developer onto the printing paper, a blade or scraper attached to part 26 may be used to remove excess remaining developer and collected into collector receptacle 27. Thereafter, roller 21 may be used to remove any latent electrostatic image from photosensitive body 22 for the next cycle of printing. Typically, the developer 25 is stored in cartridge 28 as illustrated in FIG. 1.

With such a configuration, heat is generated inside the image forming apparatus 1 by a heating roller 53 of the fixing part 50 used to fix the developer on the printing paper. Referring to FIG. 1, heating roller 53 fixes the developer on the printing paper against roller 51. Heat is also generated inside the laser scanning unit 30 by the high speed rotation of polygon mirror 35.

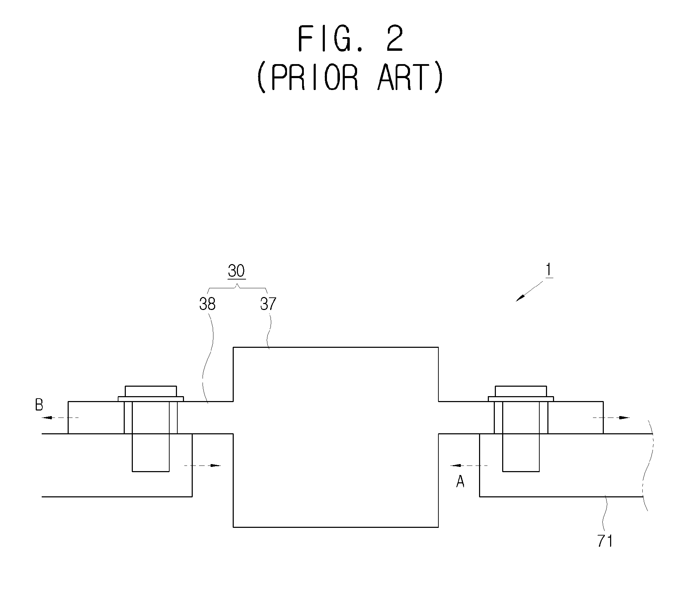

Accordingly, due to the heat generated, thermal deformation occurs in a frame (not illustrated) inside casing 70 and laser scanning unit 30. FIG. 2 is a selective cross-sectional illustration of laser scanning unit 30 coupled to main body frame 71 in the conventional image forming apparatus of FIG. 1. FIG. 2 also illustrates coupling part 38 and casing 37. Particularly, as illustrated in FIG. 2, main body frame 71 supports the laser scanning unit 30 via coupling part 38. Typically, the main body frame 71 thermally deforms in direction "A" due to exposure to heat. Also typically, the laser scanning unit 30 deforms in direction "B" due to heat exposure. Note that direction "A" is inward and direction "B" is outward as depicted in FIG. 2. Thus, thermal deformation of main body frame 71 in direction "A" opposes the thermal deformation of laser scanning unit 30 in direction "B." Accordingly, a shearing force is generated between the laser scanning unit 30 and a screw coupling part of the main body frame 71. Such shearing force leads to undesirable bending or warping deformation. Also, such deformation misaligns the laser scanned image scanned onto the photosensitive body 22 by the laser scanning unit 30 and ultimately leads to deterioration (e.g., shifting, misalignment, etc.) of the printed image quality.

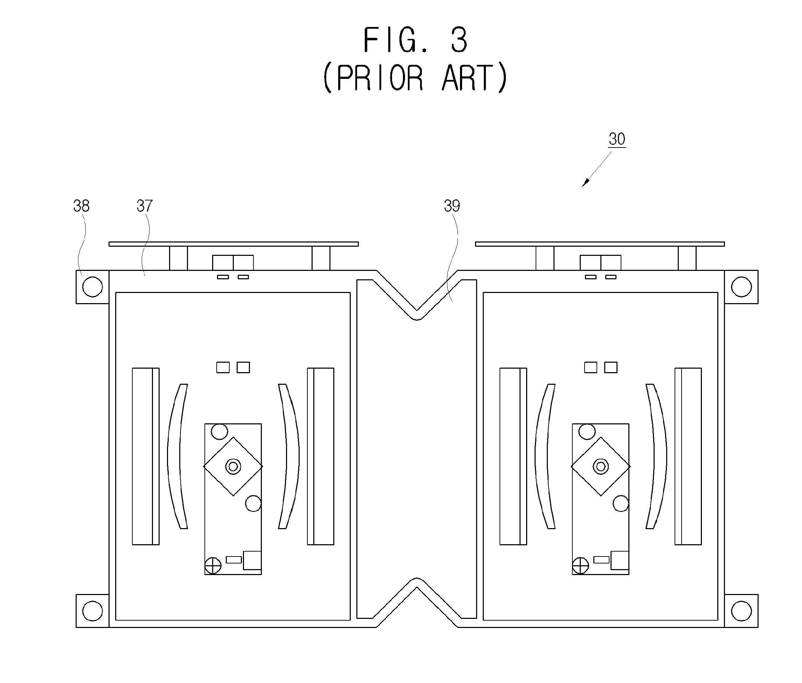

As illustrated in FIG. 3, Japanese First Publication No. 2004-205737 discloses an image forming apparatus in which an air circulation space 39 is provided inside laser scanning unit 30 to reduce the temperature rise inside the laser scanning unit 30 and to reduce thermal deformation. However, although the image forming apparatus disclosed in the Japanese Publication can reduce thermal deformation inside the casing 37 of the laser scanning unit 30, the thermal deformation and misalignment problems continue to persist because the thermal deformation of the main body frame 71 and the laser scanning unit coupling part 33 can not be sufficiently attenuated, reduced or eliminated in this fashion.

The present invention provides an image forming apparatus which reduces thermal deformation of a laser scanning unit and a coupling part of a main body frame and which may uniformly maintain proper orientation and/or alignment of the laser scanning unit.

Additional aspects of the present general inventive concept will be set forth in part in the description which follows and, in part, will be obvious from the description, or may be learned by practice of the general inventive concept.

According to the present invention there is provided an apparatus and method as set forth in the appended claims. Preferred features of the invention will be apparent from the dependent claims, and the description which follows.

According to an aspect of the present invention there is provided an image forming apparatus, including: a laser scanning unit having at least two coupling parts; and a main body frame having a main body coupling part corresponding to the laser scanning unit coupling parts, at least one of the laser scanning coupling parts and the main body coupling part containing a deformation limiting area sufficient to limit a relative deformation of the adjoining coupling parts.

The deformation limiting area may include a deformation limiting cut-out having specified or predetermined dimensions.

One of the laser scanning unit coupling parts and the main body coupling part may include a free end, and the other of the laser scanning unit coupling parts and the main body coupling part may include a deformation limiting cut-out.

The deformation limiting cut-out may be provided in a shape of an open-ended "Π".

The laser scanning unit may include a casing, and coupling parts which are extended from the casing. Each of the laser scanning coupling parts may have a free end, and the main body coupling part may have a main body free end. These free ends may be facing in the same direction as the main body free end.

The deformation limiting area may include at least one rib of a predetermined length to limit the direction of the relative deformation.

The rib may have a lengthwise orientation which may be pointed towards the main body free end.

The laser scanning coupling part and the main body coupling part may be coupled by a bolt, the laser scanning coupling part having a larger insertion hole than the diameter of the bolt screw, and the main body coupling part may include a female screw part to receive and to couple to the male bolt screw

Between the coupling part and the bolt head may be disposed a washer having an outer diameter one and a half times larger than that of the bolt head but an inner washer opening diameter sufficient to accept (e.g., readily accept or readily accommodate) the bolt screw.

The deformation limiting area may include an area which is disposed between the laser scanning coupling part and the corresponding main body coupling part and which sufficiently limits relative deformation to improve alignment and/or reduce misalignment.

An image forming apparatus may further include: a supporting frame supporting the main body coupling part; and a deformation limiting member between the main body coupling part and the supporting frame.

The deformation limiting member may have a larger thermal expansion coefficient than that of the main body coupling part.

The supporting frame may have a smaller thermal expansion coefficient than that of the main body coupling part.

According to another aspect of the present invention there is provided a laser scanning unit including: a light source; a polygon mirror scanning laser to generate a latent image on a photosensitive body; and a casing to accommodate the light source and the polygon mirror and having at least two coupling parts coupled to a main body frame, the coupling parts having a deformation limiting cut-out of a predetermined length or dimension to limit relative thermal deformation when coupled with the main body frame under operating conditions.

Each coupling part may have a coupling hole (e.g., insertion hole; bolt screw or other fastener receiving hole, etc.) to be coupled (e.g., screw-coupled or other fastener coupled) to the main body frame, and the deformation limiting cut-out is provided in the shape of an open-ended " Π" in one or more of the coupling parts.

According to another aspect of the present invention there is provided an image forming apparatus including: a unit to generate heat; and a main body having a coupling part coupled to a laser scanning unit, and a cut-out formed around the coupling part to prevent deformation of one of the laser scanning unit and the main body due to heat.

The main body may include another hole formed in the coupling part to define a reinforcement rib.

The other hole may include a plurality of holes disposed parallel to each other.

The cut-out of the main body is preferably formed such that the coupling part is extended toward the cut-out.

The coupling part is preferably extended in a direction from a portion of the main body, and the cut-out is preferably formed in the direction and in another direction substantially perpendicular to the direction.

For a better understanding of the invention, and to show how embodiments of the same may be carried into effect, reference will now be made, by way of example, to the accompanying diagrammatic drawings in which:
FIG. 1 is a schematic cross-sectional view illustrating a configuration of a conventional image forming apparatus.
FIG. 2 is a cross-sectional view illustrating a coupling configuration of a conventional laser scanning unit.
FIG. 3 is a schematic top-view illustrating a configuration of a conventional laser scanning unit.
FIG. 4A is a top perspective view schematically illustrating a coupling configuration of a laser scanning unit of an image forming apparatus according to an embodiment of the present general inventive concept.
FIG. 4B is a rear perspective view schematically illustrating a coupling configuration of a laser scanning unit of the first embodiment of the present general inventive concept.
FIG. 5A is a cross-sectional view illustrating a coupling configuration of a laser scanning unit of the first embodiment of the present general inventive concept.
FIG. 5B is a cross-sectional view illustrating a coupling configuration of a laser scanning unit of a second embodiment or other embodiments of the present general inventive concept.

Reference will now be made in detail to the embodiments of the present general inventive concept, examples of which are illustrated in the accompanying drawings, wherein like reference numerals refer to the like elements throughout. The embodiments are described below in order to explain the present general inventive concept by referring to the figures.

The same elements are given the same reference numerals in various embodiments, and they will be typically described in a first embodiment of the present general inventive concept, and may be omitted or unlabeled in other embodiments of the present general inventive concept.

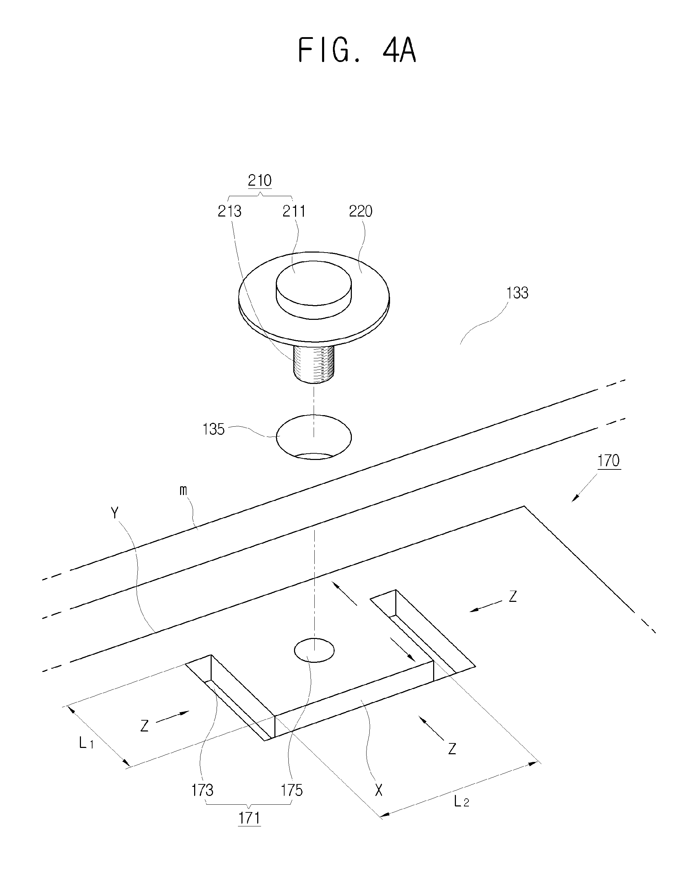

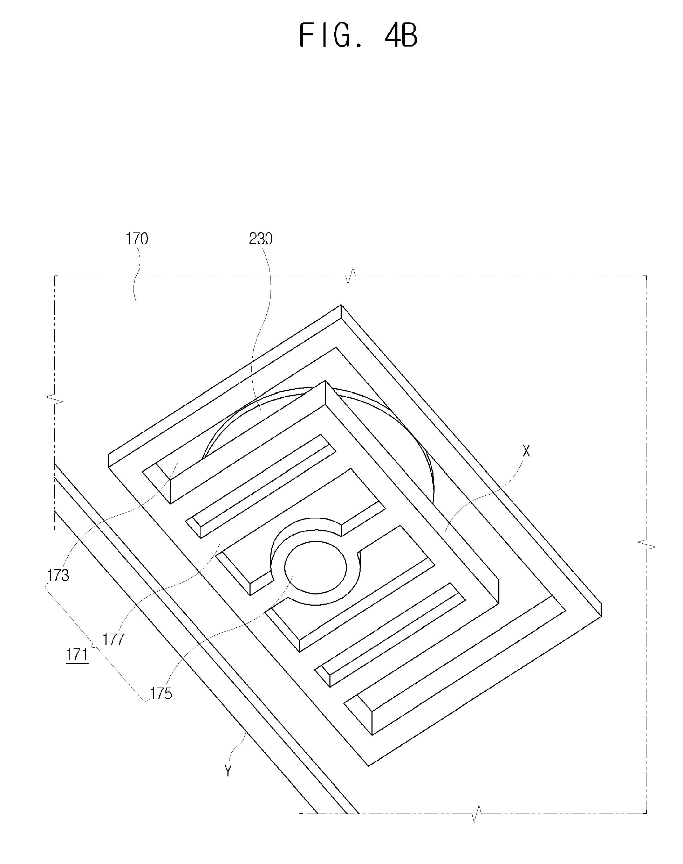

An image forming apparatus 1 according to an embodiment of the present general inventive concept may have a structure similar to a conventional image forming apparatus including a paper feeding part 10 to hold and to feed printing paper therefrom, an image forming part 40 to form an image on a printing paper page fed from the paper feeding part 10, a fixing part 50 to fix a developer spread from the image forming part 40 on the printing paper page (e.g., by heat and/or pressure), a paper discharging part 60 to discharge the paper page on which an image has been formed, and a main body casing 70 to accommodate these components. The main body casing 70 includes a main body frame 170 (see FIG. 4A) supporting the respective components illustrated therein.

The image forming part 40 includes a developing cartridge 20 to spread the developer on the printing paper page to form an image thereon, and a laser scanning unit 30 to form an electrostatic latent image onto the photosensitive body 22 of the developing cartridge 20.

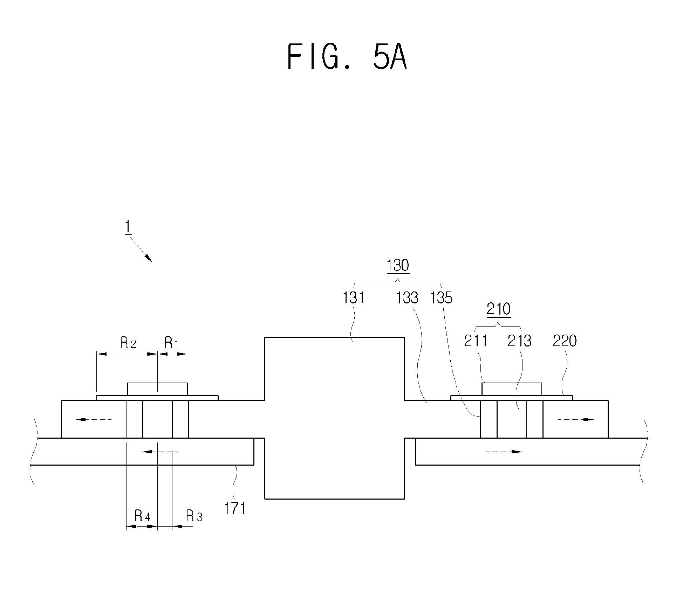

The laser scanning unit 30 includes a light source 31, a plurality of mirrors 33 which can change the path of the laser generated from light source 31 and enable it to be incident on a polygon mirror 35, which rotationally scans the laser beam onto the photosensitive body 22, and an operating part 36 to operate the polygon mirror 35. The laser scanning unit 30 also includes a casing 131 (see FIG. 5A) to accommodate these components, and coupling parts 133 which are provided on opposite sides of casing 131 to be coupled to main body frame 170.

As shown in the embodiment of FIG. 5A of the present general inventive concept, the coupling part 133 is provided to be extended from the casing 131 to form a free end in one side, or may be directly provided in the casing 131. The coupling part 133 may be respectively disposed on opposite sides of the casing 131, or may be provided as plural members on opposite sides. Here, the coupling part 133 may be provided in different shapes depending on the various methods that may be used to couple to the main body frame 170. That is, the coupling part 133 has a shape corresponding to a given respective coupling method such as glue coupling, screw coupling, pin coupling, or rivet coupling, etc.

Referring to FIG. 5A, a laser scanning unit 130 according to an embodiment of the present general inventive concept is coupled to the main body frame 170 by a screw. Accordingly, the coupling part 133 has an inserting hole 135 into which a screw 210 is inserted. A radius R₄ of the inserting hole 135 is desirably provided to be larger than a radius R₃ of a male screw part 213 of the screw 210 so that contact between the male screw part 213 and a circumference of the inserting hole 135 is minimized sufficient to reduce thermal deformation and/or misalignment of the coupling part 133 with the main body frame coupling part 171.

Meanwhile, a radius R₂ (e.g., defining the outer washer circumference) of a washer 220 disposed between the inserting hole 135 and a screw head part 211 is desirably provided one and a half times larger than a radius R₁ of the screw head part 211 so as to reduce and/or minimize a screw coupling force. That is, the area in which the washer 220 is in contact with the coupling part 133 is enlarged to distribute the load (or weight) otherwise focused on the screw head part 211 into a wider distribution load (or weight), to disperse the screw coupling force. The radius R₁ of the screw head part 211 may be the same radius as the radius R₄. The present general inventive concept is not limited thereto. It is possible that the radius R₁ of the screw head part 211 may be larger or smaller than the radius R₄.

As shown in FIGS. 4A and 5A, the main body frame 170 according to an embodiment of the present general inventive concept includes a main body coupling part 171 coupled to a corresponding coupling part 133 of the laser scanning unit 130. Referring to FIG. 4A, the main body coupling part 171 includes a main body inserting hole 175 into which the male screw part 213 is inserted or received, correspondingly located in sufficient alignment with inserting hole 135 of the coupling part 133. The main body inserting hole 175 is provided to have the same diameter (or slightly larger) as the diameter of the male screw part 213. The inside of the main body inserting hole 175 provides a female screw part to receive the male screw part 213 therein.

Referring to FIG. 4A, the main body coupling part 171 includes (in a deformation limiting area) a deformation limiting cut-out 173 to limit deformation at "Z" in the main body supporting frame 170. Deformation otherwise generated by heat build-up inside the main body supporting frame 170 is transferred to the main body coupling part 171. The deformation limiting cut-out 173 (e.g., together with one or more of bolt 210, limiting hole 135, washer 220, and hole 175, etc.) reduces thermal deformation produced in the main body supporting frame 170 by fully or partially limiting the deformation to the main body coupling part 171. Additionally, the deformation limiting cut-out 173 also prevents (or reduces) the magnitude of thermal deformation generated in the main body coupling part 171 from being transferred to the main body frame 170. The deformation limiting cut-out 173 may have a shape of a groove or a hole.

Referring further to FIG. 4A, the main body coupling part 171 has a first free end part "X" facing in an opposing direction with respect to the facing direction of a second free end part "Y" of the main body frame 170 in which thermal deformation may be caused by heat generated in the fixing part 50. However, the deformation limiting cut-out 173 reduces, attenuates or sufficiently minimizes thermal deformation and/or misalignment of main body frame 170 in relation to the laser scanning unit 130. Accordingly, thermal deformation focused on the free end part "Y" of the otherwise conventional main body frame 170 is -now directed (fully or partially) towards the free end "X" (e.g., cross-sectional face parallel with line L₂) of the main body coupling part 171to reduce thermal deformation of the main body frame 170. The free end part "X" is defined by the deformation limiting cut-out 173, and the hole 175 is formed in the free end part "X".

Thus, as depicted in FIGS. 4A and 5A, a direction of thermal deformation of the free end "X" generated at the deformation limiting cut-out 173 is desirably provided towards the same direction "A" as that of the free end "m" of the coupling part 133 of the laser scanning unit 130. This is so because in the case that the coupling part 133 of the laser scanning unit 130 and the main body frame 170 are thermally expanded (inside the main body), the thermal expansion of each is directed towards the direction of the free end part "m" of the coupling part 133 and which is also towards the direction of the free end "X" of the main body coupling part 171. Thus, thermal deformation of parts 133 and 171 is directed towards the same general direction. Accordingly, a shearing force is either not generated, is minimized and/or is reduced (in the inserting holes 135 and 175 to which screw 210 is coupled). Such reduction of shearing force adequately prevents undesirable deformation and/or misalignment.

As shown in FIG. 4A, the deformation limiting cut-out 173 in the shape of an open-ended " Π " may be provided to have a separate free end part "X", or may be provided as a plurality of aligned parallel holes (or slots or an equivalent thereof) provided to have a predetermined overall length (e.g., when in parallel or other acceptable alignment with each other) sufficient to provide unidirectional thermal deformation. Also, the deformation limiting cut-out 173 may be provided to have any other shape or configuration suitable for reducing undesirable shearing force due to thermal deformation of the main body coupling part 171 coupled to with the laser scanning unit coupling part 133.

The width "L1" and the height "L2" of the deformation limiting cut-out 173 may be provided according to the type, kind and the size of the coupling units used to join or couple the coupling parts133 to the main body frame 170 via main body coupling part 171. When using the screw coupling according to an embodiment of the present general inventive concept, the deformation limiting cut-out Z (e.g., 173 or its equivalent) is provided with dimensions (e.g., L1 together with L2) to accommodate the washer 220 so that any deformation generated in the coupling part 133 can be properly distributed around the vicinity of the deformation limiting cut-out 173. On the other hand, in the case that the width "L1" and the depth "L2" of the deformation limiting cut-out 173 are too large, too much undesirable deformation may be generated in the coupling part 133 by a deformation generated in an area in close proximity to the insertion holes 135 and/or 175.

According to an embodiment of the present general inventive concept, the coupling part 133 of the laser scanning unit 130 may be constructed of the same material as that of the main body coupling part 171. That is because a shearing force may be generated because of a difference in the thermal expansion coefficients of materials used for the coupling part 133, the main body coupling part 171, and the screw coupling part (i.e., when different materials are used). If different materials are used, then it is desirable to match or select as best as possible the thermal expansion coefficients for the particular electrophotographic printing apparatus being used or designed for the magnitude of internal thermal heat expected to be generated during normal repeated use of the apparatus.

As shown in FIG. 4B, in the bottom view of the main body coupling part 171, a reinforcement rib 177 is provided to reinforce the stiffness or strength of the main body coupling part 171. The reinforcement rib 177 is provided to reinforce the main body frame 170 otherwise reduced by the deformation limiting cut-out 173. The main body coupling part 171 may include additional holes 176 to define the reinforcement rib 177. Here, the reinforcement rib 177 is oriented in the lengthwise direction towards the free end "X" to limit or reduce the thermal deformation generated in the main body coupling part 171and/or direct deformation towards the direction of the free end "X".

The reinforcement rib 177 is provided to have a proper thickness in consideration of the thickness of the main body coupling part 171. Also, the reinforcement rib 177 may be provided as plural members disposed at predetermined intervals. See, for example, the embodiment of FIG. 4B of the present general inventive concept.

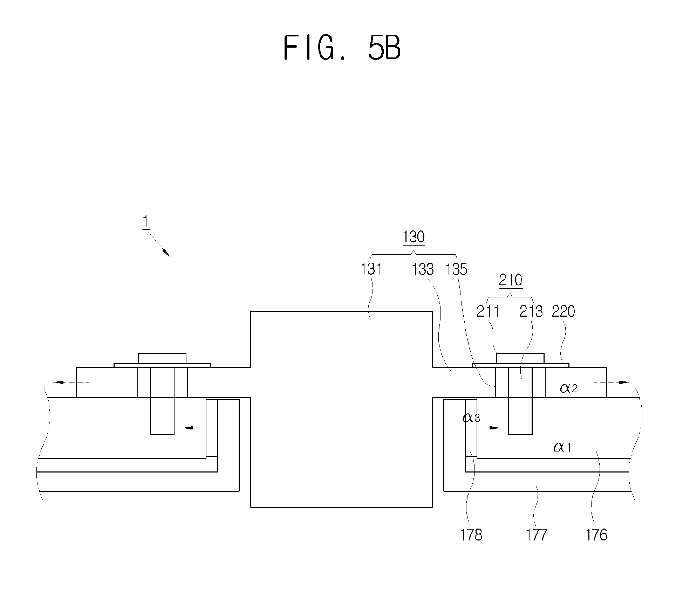

Referring to FIGS. 5A and 5B, the coupling part 133 is extended from the casing 131 in the above-described embodiments, but it may be directly provided in the casing 131. That is, a coupling hole may be provided in the surface of the casing 131 to which a screw is coupled, and the deformation limited cut-out 173 may be provided to circumscribe (e.g., FIGS. 4A and 4B) the coupling hole.

As shown in FIG. 4A, in the laser scanning unit 130 with the illustrated configuration (according to an embodiment of present general inventive concept), the free end "X" (of main body coupling part 171) is provided facing the same direction as the free end of "m" (of the coupling part 133 of the laser scanning unit 130) by incorporating or providing the deformation limiting cut-out 173. The heat generated inside the main body and thermal deformation thereof together with the thermal deformation generated by the laser scanning unit 130 are directed in the same direction as shown by the dotted arrows on each side of casing 131 of FIG. 5A. Accordingly, as a shearing force is avoided (or adequately reduced) around the screw coupling part 210. Thus, undesirable deformation such as bending or warping is avoided or is sufficiently reduced or minimized. Therefore, the laser scanning direction of the laser scanning unit 130 becomes more uniformly controlled to produce a consistently maintained and/or improved uniform image quality and/or reduced deterioration of same due to misalignment and/or undesirable shearing force created by thermal expansion and deformation in opposing directions at the screw coupling, for example.

As shown in FIG. 5B, the main body frame 170 includes a supporting frame 177 reinforcing the main body coupling part 176 in a part of the main body via a deformation limiting member 178. Such member 178 limits relative deformation between the main body 176 and the supporting frame 177.

The deformation limiting member 178 may be provided as a member having a thermal expansion coefficient "α₃" smaller than a thermal expansion coefficient "α₂" of the coupling part 133 and larger than a thermal expansion coefficient "α₁" of the main body coupling part 176. Accordingly, in the case that a thermal deformation in the opposite direction with the coupling part 133 is generated by the thermal expansion of the main body 176, a larger thermal deformation (in an opposing direction) of deformation limiting member 178 than that of the main body coupling 176 is generated to counteract the thermal expansion of the main body coupling part 176. Accordingly, the thermal deformation direction of the main body coupling part 176 is more in directional alignment with that of coupling part 133.

According to the above-described second embodiment of the present general inventive concept, the deformation limiting cut-out 173 is provided to form the free end "X" facing in the same direction as the free end "m" of the coupling part 133, and the thermal deformation direction of the coupling part 133 is directionally aligned with that of the main body coupling part 171.

According to a third embodiment of the present general inventive concept, referring to FIG. 5B, in the case that it is difficult to provide a deformation limiting cut-out 173 in the main body coupling part 176, a supporting frame 177 may be provided in the lower part of the main body 176, and a deformation limited member 178 having a larger thermal expansion coefficient than that of the main body coupling part 176 may be provided between the supporting frame 177 and the main body coupling part 176, to thereby accord the thermal deformation direction of the main body coupling part 176 to be more in line with the direction of thermal deformation of the coupling part 133.

Accordingly, the deformation between the coupling part 133 and the main body coupling part 176 is reduced and the laser scanning direction of the laser scanning unit becomes more uniform, thereby maintaining a more uniform and/or improved image quality.

The above-described deformation limiting cut-out and the deformation limiting member are provided in the main body frame. However, they may be provided in the laser scanning unit casing or its coupling part.

Also, the above-described embodiment of the deformation limiting cut-out and the deformation limiting member may be used for not only the laser scanning unit and the main body frame but also may be used for the developing cartridge and the main body frame supporting the developing cartridge, and the heating roller and the pressing roller and the main body frame supporting these two components to reduce a thermal deformation generated by heat inside the main body.

According to the above-described non-limiting embodiments of the present general inventive concept, a deformation limiting cut-out limiting deformation is provided in the main body frame coupled to the laser scanning unit to minimize deformation of the laser scanning unit coupling part.

Also, according to other embodiments of the present general inventive concept, in the lower part of the main body frame may be provided a supporting frame and a deformation limiting member limiting deformation of the main body frame to minimize relative deformation with the laser scanning unit coupling part.

Accordingly, the deformation of the coupling part is reduced after prolonged use, and the laser scanning direction of the laser scanning unit is more uniformly maintained to provide uniform and/or improved image quality over an extended period of time.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. An image forming apparatus, comprising:
a laser scanning unit (30) having at least two coupling parts (133); and
a main body frame (170) having a main body coupling part (171) corresponding to each of the coupling parts (133),
at least one of the coupling parts (133) and the main body coupling part (171) comprising a deformation limiting area to limit a relative deformation of the main body coupling part (171) and the corresponding at least two coupling parts (133).

2. The image forming apparatus according to claim 1, wherein the deformation limiting area comprises a deformation limiting cut-out (173) of a predetermined dimension.

3. The image forming apparatus according to claim 2, wherein the one of the coupling parts (133) and the main body coupling part (171) comprises a free end (X), and the other of the coupling parts (133) and the main body coupling part (171) comprises the deformation limiting cut-out (173) to define the free end (X).

4. The image forming apparatus according to claim 3, wherein the deformation limiting cut-out (173) is provided in the shape of a " Π ".

5. The image forming apparatus according to claim 3 or claim 4, wherein:
the laser scanning unit (30) comprises a casing (131);
the at least two coupling parts (133) are extended from the casing (131);
each of the at least two coupling parts (133) have an oriented free end (X); and
the corresponding main body coupling part (171) has a main body free end oriented to extend in the same direction as the oriented free end (X) of the corresponding coupling part extended from the casing (131).

6. The image forming apparatus according to any one of claims 3, 4 or 5, wherein the deformation limiting area comprises at least one rib of a predetermined length.

7. The image forming apparatus according to claim 6, wherein the rib has a lengthwise orientation which is oriented towards the main body free end.

8. The image forming apparatus according to claim 5, wherein:
the at least two coupling parts (133) and the corresponding main body coupling part (171) are coupled by a bolt (210) having a bolt head and a male bolt screw;
the at least two coupling parts (133) have a larger diameter insertion hole than a diameter of the bolt screw; and
the main body coupling part (171) comprises a female screw part to receive and couple to the male bolt screw.

9. The image forming apparatus according to claim 8, further comprising:
a washer (220) disposed between the coupling part and the bolt head, wherein the washer (220) has a diameter one and a half times larger than a diameter of the bolt head.

10. The image forming apparatus according to any preceding claim, wherein the deformation limiting area is disposed on the at least two coupling parts (133) and on the corresponding main body coupling part (171).

11. The image forming apparatus according to claim 10, further comprising:
a supporting frame (170) to support the main body coupling part (171); and
a deformation limiting member (178) disposed between the main body coupling part (171) and the supporting frame (170).

12. The image forming apparatus according to claim 11, wherein the deformation limiting member (178) has a larger thermal expansion coefficient than that of the main body coupling part (171).

13. The image forming apparatus according to claim 12, wherein the supporting frame (170) has a smaller thermal expansion coefficient than that of the coupling part.

14. A laser scanning unit (30) comprising:
a light source (31);
a polygon mirror (35) to generate a scanning laser from the light source (31) and to direct the laser on a photosensitive body; and
a casing (131) to accommodate the light source (31) and the polygon mirror (35) and having at least two coupling parts (133) coupled to an external main body frame (170),
wherein the at least two coupling parts (133) comprise a deformation limiting cut-out (173) of a selected length sufficient to limit relative deformation with the main body frame (170).

15. The laser scanning unit (30) according to claim 14, wherein each of the at least two coupling parts (133) comprises an insertion hole to couple to the main body frame (170), and the deformation limiting cut-out (173) is provided in the shape of a " Π".

16. An image forming apparatus comprising:
a unit to generate heat; and
a main body (176) having a coupling part (133) coupled to a laser scanning unit (30), and a cut-out (173) formed around the coupling part (133) to prevent deformation of one of the laser scanning unit (30) and the main body (176) due to heat.

17. The image forming apparatus of claim 16, wherein the main body (176) comprises another hole (135) formed in the coupling part (133) to define a reinforcement rib.

18. The image forming apparatus of claim 17, wherein said another hole (135) comprises a plurality of holes disposed parallel to each other.

19. The image forming apparatus of any one of claims 16 to 18, wherein the cut-out (173) of the main body (176) is formed such that the coupling part (133) is extended toward the cut-out (173).

20. The image forming apparatus of any one of claims 16 to 19, wherein the coupling part (133) is extended in a direction from a portion of the main body (176), and the cut-out (173) is formed in the direction and in another direction substantially perpendicular to the direction.
